# EUROPÄISCHE PATENTANMELDUNG

(11) **EP 3 290 983 A1**
(43) Veröffentlichungstag der Anmeldung: **07.03.2018**
(21) Anmeldenummer: 16187303.9
(22) Anmeldetag: 05.09.2016
(51) Int. Cl.: G02B 21/00, G01N 21/63, G01N 21/64

(54) **VERFAHREN ZUM JUSTIEREN EINES LASERSCANNING-FLUORESZENZMIKROSKOPS UND LASERSCANNING-FLUORESZENZMIKROSKOP MIT EINER AUTOMATISCHEN JUSTIERVORRICHTUNG**

(71) Anmelder: Abberior Instruments GmbH, 37077 Göttingen (DE)
(72) Erfinder: Heine, Jörn, 37073 Göttingen (DE); Reuss, Matthias, 37083 Göttingen (DE); Harke, Benjamin, 37083 Göttingen (DE); Kastrup, Lars, 37073 Göttingen (DE)
(74) Vertreter: REHBERG HÜPPE + PARTNER

(57) **Zusammenfassung**

Zum Einstellen oder Überprüfen einer korrekten Justierung eines Laserscanning-Fluoreszenzmikroskops (15), in der ein Intensitätsmaximum (1) von Anregungslicht (6) und ein Intensitätsminimum (4) von Fluoreszenzverhinderungslicht (7) und/oder eine Abbildung einer vor einem Fluoreszenzlichtdetektor (18) angeordneten Lochblende (2) im Fokus eines Objektivs (20) zusammenfallen, wird eine mit einem Fluoreszenzfarbstoff markierte Struktur in einer Probe (22) mit dem Intensitätsmaximum (1) des Anregungslichts (6) abgetastet, um Bilder (A, B) der Probe (22) mit Abbildern (3, 30, 31, 32) der Struktur zu erzeugen, und wird aus den Abbildern (3, 30, 31, 32) der Struktur in den Bildern eine Metrik berechnet, die eine Abweichung von der korrekten Justierung anzeigt. Die erzeugten Bilder entsprechen dabei unterschiedlichen Intensitäten des Fluoreszenzverhinderungslichts (7) und/oder unterschiedlichen Blendenöffnungen der Lochblende (2), und die Metrik ist ein Versatz (8) zwischen Lagen der Abbilder der Struktur in den erzeugten Bildern.

## Beschreibung

### TECHNISCHES GEBIET DER ERFINDUNG

Die Erfindung bezieht sich auf ein Verfahren zum Einstellen oder Überprüfen einer korrekten Justierung eines Laserscanning-Fluoreszenzmikroskops, in der ein Intensitätsmaximum von Anregungslicht und ein Intensitätsminimum von Fluoreszenzverhinderungslicht und/oder eine Abbildung einer vor einem Fluoreszenzlichtdetektor angeordneten Lochblende im Fokus eines Objektivs zusammenfallen. Insbesondere bezieht sich die vorliegende Erfindung auf ein solches Verfahren, das zum Einstellen oder Überprüfen der Justierung eine Metrik verwendet, die berechnet wird und ein exaktes automatisches Justieren ermöglicht.

In einer zweiten Ausführungsform bezieht sich die Erfindung auf ein Verfahren zum Einstellen oder Überprüfen einer korrekten Justierung eines Laserscanning-Fluoreszenzmikroskops, in der ein Intensitätsmaximum von Anregungslicht mit einer Wellenlänge und ein weiteres Intensitätsmaximum von weiterem Anregungslicht mit einer anderen Wellenlänge und/oder eine Abbildung einer vor einem Fluoreszenzlichtdetektor mit einem spektralen Detektionsbereich angeordneten Lochblende und eine Abbildung einer weiteren Lochblende vor einem weiteren Fluoreszenzlichtdetektor mit einem anderen spektralen Detektionsbereich im Fokus eines Objektivs zusammenfallen.

Weiterhin bezieht sich die vorliegende Erfindung auf ein Laserscanning-Fluoreszenzmikroskop mit einer automatischen Justiervorrichtung zur Durchführung eines solchen Verfahrens.

Das Laserscanning-Fluoreszenzmikroskop ist insbesondere ein konfokales Mikroskop mit einer vor einem Fluoreszenzlichtdetektor angeordneten Lochblende und/oder ein hochauflösendes Laserscanning-Fluoreszenzmikroskop, bei dem die Auflösung durch Fluoreszenzverhinderungslicht mit einem Intensitätsminimum erhöht wird. Das Fluoreszenzverhinderungslicht kann insbesondere sogenanntes STED-Licht oder Umschaltlicht sein, das einen Fluoreszenzfarbstoff durch stimulierte Emission oder Überführen in einen Dunkelzustand an der Emission von Fluoreszenzlicht hindert.

### STAND DER TECHNIK

Aus T. J. Gould, et al.: Auto-aligning stimulated emission depletion microscope using adaptive optics, optics letters, Vol. 38, No. 11 (2013) 1860-1862 und der US 2015/0226950 A1 sind ein konventionelles und ein eine Metrik verwendendes Verfahren zum Justieren eines STED-Laserscanning-Fluoreszenzmikroskop bekannt, um das Intensitätsminimum des fokussierten STED-Lichts auf das Zentrum des fokussierten Anregungslichts auszurichten. Bei dem konventionellen Verfahren wird Streulicht von Goldpartikeln abgebildet, und die Positionen der Fokusse des STED-Lichts und des Anregungslichts werden relativ zueinander verschoben, bis ihre Punktverteilungsfunktionen aufeinander ausgerichtet sind. Das konventionelle Verfahren erfordert ein Umschalten des STED-Laserscanning-Fluoreszenzmikroskops in einen Streulichtabbildungsmodus und basiert typischerweise auf der manuellen Einstellung der Position der Fokusse des STED-Lichts und des Anregungslichts. Bei dem eine Metrik verwendenden bekannten Verfahren wird die Metrik aus Helligkeit und Schärfe von STED-Bildern für unterschiedliche Relativlagen der Fokusse des STED-Lichts und des Anregungslichts berechnet und die optimale Relativlage danach bestimmt, dass die Metrik einen maximalen Wert annimmt. Hieran kann sich eine Feinjustierung anschließen, bei der eine zweite Metrik verwendet wird, in die nur die Helligkeit der STED-Bilder eingeht. Diese zweite Metrik basiert darauf, dass STED-Bilder am hellsten sind, wenn die Position des Intensitätsminimums des STED-Lichts auf das Zentrum des Intensitätsmaximums des Anregungslichts ausgerichtet ist. Zum Nachweis der Funktion des die Metrik verwendeten bekannten Verfahrens werden mit demselben Laserscanning-Fluoreszenzmikroskop aufgenommene konfokale und STED-Bilder vor und nach der die Metrik verwendenden Justierung verglichen. Während die Schwerpunkte von Abbildern von fluoreszenten Partikeln in den STED- und konfokalen Bildern bei dem noch nicht justierten Mikroskop voneinander abweichen, fallen die Schwerpunkte in den Bildern des justierten Laserscanning-Fluoreszenzmikroskops zusammen. Zur Relativverschiebung der Fokusse des STED-Lichts und des Anregungslichts wird die Verwendung eines Spatial Light Modulators (SLM) im Strahlengang des STED-Lichts vorgeschlagen.

Aus der DE 10 2007 011 305 A1 sind eine Vorrichtung und ein Verfahren zur Strahlenjustage in einem optischen Strahlengang mit mindestens zwei voneinander unabhängigen Lichtquellen bekannt. Insbesondere geht es dabei um einen Strahlengang eines hochauflösenden STED-Laserscanning-Fluoreszenzmikroskops. Die Strahlen der Lichtquellen werden in einem gemeinsamen Beleuchtungsstrahlengang überlagert. Ein Kalibrierpräparat, anhand dessen die Pupillen- und/oder Fokuslage der Strahlen überprüfbar ist, wird vorübergehend in den Beleuchtungsstrahlengang eingebracht. Konkret kann das Kalibrierpräparat an der Stelle oder in der Nähe eines Zwischenbilds in dem Beleuchtungsstrahlengang eingebracht werden und eine Oberflächenstruktur aufweisen. Zu Justagezwecken ist mindestens ein Stellelement zur Beeinflussung der Pupillen- und/oder Fokuslage zumindest eines der zu vereinigenden Strahlen vorgesehen. Die bekannte Strahlenjustage mit Hilfe des Kalibrierpräparats berücksichtigt nicht die Einflüsse von optischen Elementen, die sich hinter dem Kalibrierpräparat in dem Beleuchtungsstrahlengang befinden. Anders gesagt erlaubt das Kalibrierpräparat nur eine Justierung im Bereich des Zwischenbilds, nicht aber im Bereich des Fokus des Objektivs in der Probe.

### AUFGABE DER ERFINDUNG

Der Erfindung liegt die Aufgabe zugrunde, Verfahren zum Einstellen oder Überprüfen einer korrekten Justierung eines Laserscanning-Fluoreszenzmikroskops und ein entsprechendes Laserscanning-Mikroskop aufzuzeigen, die ein schnelles zielgerichtetes Justieren oder ein schnelles quantitatives Überprüfen der Justierung unmittelbar im Fokus des Objektivs und im Fluoreszenzlichtabbildungsmodus des Laserscanning-Fluoreszenzmikroskops ermöglichen.

### LÖSUNG

Die Aufgabe der Erfindung wird durch ein Verfahren mit den Merkmalen des unabhängigen Patentanspruchs 1 und durch ein Verfahren mit den Merkmalen des unabhängigen Patentanspruchs 14 gelöst. Die abhängigen Patentansprüche 2 bis 13 betreffen bevorzugte Ausführungsformen des erfindungsgemäßen Verfahrens nach Patentanspruch 1. Der Patentanspruch 15 ist auf ein Laserscanning-Fluoreszenzmikroskop zur Durchführung der erfindungsgemäßen Verfahren gerichtet.

### BESCHREIBUNG DER ERFINDUNG

Bei dem erfindungsgemäßen Verfahren zum Einstellen oder Überprüfen einer korrekten Justierung eines Laserscanning-Fluoreszenzmikroskops, in der ein Intensitätsmaximum von Anregungslicht und ein Intensitätsminimum von Fluoreszenzverhinderungslicht und/oder eine Abbildung einer vor einem Fluoreszenzlichtdetektor angeordneten Lochblende im Fokus eines Objektivs zusammenfallen, wobei eine mit einem Fluoreszenzfarbstoff markierte Struktur in einer Probe mit dem Intensitätsmaximum des Anregungslichts abgetastet wird, um Bilder der Probe mit Abbildern der Struktur zu erzeugen und wobei aus den Abbildern der Struktur in den Bildern eine Metrik berechnet wird, die eine Abweichung von der korrekten Justierung anzeigt, entsprechen die erzeugten Bilder unterschiedlichen Intensitäten des Fluoreszenzverhinderungslichts und/oder unterschiedlichen Blendenöffnungen der Lochblende und ist die Metrik ein Versatz zwischen Lagen der Abbilder der Struktur in den erzeugten Bildern.

Dass die erzeugten Bilder unterschiedlichen Intensitäten des Fluoreszenzverhinderungslichts entsprechen bedeutet, dass eine maximale Intensität des Fluoreszenzverhinderungslichts, die die Abmessungen des Intensitätsminimums des Fluoreszenzverhinderungslichts und damit die mit dem Fluoreszenzverhinderungslicht erreichbare räumliche Auflösung bestimmt, unterschiedlich ist, konkret mit der Intensität des Fluoreszenzverhinderungslichts ansteigt. Die auf ihre maximale Intensität normierte räumliche Intensitätsverteilung des Fluoreszenzverhinderungslichts, die das Intensitätsminimum umfasst, bleibt dabei in der Regel bei allen Bildern gleich. Dies ist aber nicht zwingend, solange die räumliche Auflösung mit der Intensität des Fluoreszenzverhinderungslichts ansteigt.

Dass bei nicht ordnungsgemäß justierten Laserscanning-Fluoreszenzmikroskopen ein Versatz zwischen einem konfokal ausgenommenen Bild und einem STED-Bild derselben Struktur auftritt, ist grundsätzlich aus T. J. Gould (2013) bekannt. Dass dieser Versatz aber als Metrik zum zielgerichteten Justieren und quantitativen Überprüfen der Justierung des entsprechenden Laserscanning-Fluoreszenzmikroskops geeignet ist, ist dort nicht entnehmbar. Im Gegenteil werden von T. J. Gould et al. (2013) zwei andere Metriken für eine Grobjustierung und eine anschließende Feinjustierung vorgeschlagen, und beide dieser Metriken müssen bei der Justierung maximiert werden. Demgegenüber gibt die erfindungsgemäße Metrik in Form des Versatzes zwischen Lagen der Abbilder der Struktur in den erzeugten Bildern sowohl eine Richtung als auch ein Maß der bei der Justierung auszugleichenden Fehljustierung des Laserscanning-Fluoreszenzmikroskops an. Das erfindungsgemäße Verfahren führt daher nicht durch eine Maximierung einer Metrik bei versuchsweiser Verlagerung zu der gewünschten optimalen Justierung, wobei eine größere Zahl von Bildern zu erzeugen ist. Stattdessen wird eine vorhandene Fehljustierung erfindungsgemäß mit zwei, drei oder ähnlich wenigen erzeugten Bildern präzise quantitativ erfasst und kann so zielgerichtet ausgeglichen werden. Wenn nach diesem Ausgleich nochmals Bilder mit unterschiedlichen Intensitäten des Fluoreszenzverhinderungslichts und/oder unterschiedlichen Blendenöffnungen der Lochblende erzeugt werden, dient dies nur der Kontrolle der anhand der zuvor berechneten Metrik eingestellten Justierung.

Überdies liegt dem erfindungsgemäßen Verfahren die Erkenntnis zugrunde, dass die Metrik in Form des Versatzes zwischen Lagen der Abbilder der Struktur in den erzeugten Bildern auch genutzt werden kann, um eine Lochblende vor dem Fluoreszenzlichtdetektor, d. h. deren Abbild im Fokus des Objektivs relativ zu dem dortigen Intensitätsmaximum des Anregungslichts zu justieren.

Die unterschiedlichen Intensitäten des Fluoreszenzverhinderungslichts und/oder die unterschiedlichen Blendenöffnungen der Lochblende, denen die erzeugten Bilder bei dem erfindungsgemäßen Verfahren entsprechen, können insbesondere die Intensität null des Fluoreszenzverhinderungslichts und/oder eine über eine Airy-Einheit hinausgehende Blendenöffnung oder eine Entfernung der Lochblende umfassen. Die unterschiedlichen Intensitäten des Fluoreszenzverhinderungslichts und/oder die unterschiedlichen Blendenöffnungen können das mit dem Fluoreszenzlichtdetektor erfasste Fluoreszenzlicht aber auch sämtlich, und zwar in unterschiedlichem Maße, räumlich einschränken. In jedem Fall ist eine Intensität des Fluoreszenzverhinderungslichts oder eine Blendenöffnung der unterschiedlichen Intensitäten bzw. Blendenöffnungen, denen die erzeugten Bilder entsprechen, so groß bzw. so klein, dass hierdurch das von dem Fluoreszenzlichtdetektor detektierte Fluoreszenzlicht räumlich eingeschränkt wird.

In einer konkreten Ausführungsform des erfindungsgemäßen Verfahrens wird das Intensitäts-maximum des Anregungslichts relativ zu dem Intensitätsminimum des Fluoreszenzverhinderungslichts in eben der Richtung des Versatzes verlagert, den das Abbild der Struktur in einem Bild, das einer höheren Intensität des Fluoreszenzverhinderungslichts entspricht, gegenüber dem Abbild der Struktur in einem anderen Bild aufweist, das einer niedrigeren Intensität des Fluoreszenzverhinderungslichts entspricht.

Entsprechend kann das Intensitätsmaximum des Anregungslichts relativ zu der Abbildung der Lochblende in der Richtung des Versatzes verlagert werden, den das Abbild der Struktur in einem Bild, das einer kleineren Blendenöffnung der Lochblende entspricht, gegenüber dem Abbild der Struktur in einem anderen Bild aufweist, das einer größeren Blendenöffnung der Lochblende entspricht.

Weiterhin kann die Abbildung der Lochblende relativ zu dem Intensitätsminimum des Fluoreszenzverhinderungslichts in der Richtung des Versatzes verlagert werden, den das Abbild der Struktur in einem Bild, dass einer höheren Intensität des Fluoreszenzverhinderungslichts entspricht, gegenüber dem Abbild der Struktur in einem anderen Bild aufweist, das einer niedrigen Intensität des Fluoreszenzverhinderungslichts entspricht.

Das Maß, um das das Intensitätsmaximum des Anregungslichts bzw. die Lochblende für die korrekte Justierung zu verschieben ist, hängt von der relativen Breite der sich durch die verschiedenen Intensitäten des Fluoreszenzverhinderungslichts und/oder die verschiedenen Blendenöffnungen der Lochblende ergebenden unterschiedlichen Punktabbildungsfunktionen bzw. den damit erreichten räumlichen Auflösungen ab. Je größer der Unterschied in der Breite der beiden Punktabbildungsfunktionen ist, desto stärker nähert sich die Entfernung, über die das Intensitätsminimum des Anregungslichts zu verschieben ist, dem Einfachen des Versatzes an. Beispielsweise ist ein Verschieben um das Einfache des Versatzes dann angezeigt, wenn das eine der erzeugten Bilder ein konfokales Bild und das andere ein hochaufgelöstes STED-Bild mit hoher Intensität und entsprechend kleinen Abmessungen des Intensitätsminimums des Fluoreszenzverhinderungslichts ist. Umgekehrt ist ein Verschieben um etwa das Zweifache des Versatzes dann angezeigt, wenn das eine der erzeugten Bilder ein Bild ohne Lochblende und Fluoreszenzverhinderungslicht und das andere ein konfokales Bild mit einer Lochblende ist, deren Blendenöffnung einer Airy-Einheit entspricht. In jedem Fall ist das Intensitätsmaximum des Anregungslichts bzw. die Lochblende für die korrekte Justierung genau in der Richtung des Versatzes zu verschieben. Das genaue Maß der für die korrekte Justierung erforderlichen Verschiebung hängt von den räumlichen Auflösungen der Struktur in dem einen und dem anderen Bild ab und kann entsprechend als Funktion der Auflösungen und/oder der zu diesen Auflösungen führenden unterschiedlichen Intensitäten des Fluoreszenzverhinderungslichts, denen das eine und das andere Bild entsprechen, festgelegt werden. Dabei ist der Wert der Funktion größer oder gleich eins und der konkrete Wert kann jeweils aus einer die Funktion beschreibenden Formel berechnet oder einer die Funktion punktweise definierenden Nachschlagetabelle entnommen werden.

Es versteht sich, dass bei der Verwendung des Ein- oder Mehrfachen des als Metrik berechneten Versatzes der Abbildungsmaßstab des Laserscanning-Fluoreszenzmikroskops zu berücksichtigen ist.

Die in den voranstehenden Absätzen beschriebenen Ausführungsformen des erfindungsgemäßen Verfahrens verwenden jeweils das höher auflösende Bild als Bezugspunkt. Bei einem hochauflösenden Laserscanning-Fluoreszenzmikroskop ist das Bild mit der höchsten Intensität des Fluoreszenzverhinderungslichts und damit mit den geringsten Abmessungen des Intensitäts-minimums des Fluoreszenzverhinderungslichts das Bild mit der höchsten räumlichen Auflösung. Entsprechend ist es sinnvoll, das Anregungslicht und die Lochblende hierauf auszurichten. Da es aber auf eine relative Ausrichtung des Anregungslichts und des Fluoreszenzverhinderungslichts und/oder der Lochblende ankommt, kann auch beispielsweise das Intensitätsmaximum des Anregungslichts als Bezugspunkt verwendet werden. Auch dabei kann die erfindungsgemäße Metrik zur Bestimmung der notwendigen Verlagerung des Intensitätsminimums des Fluoreszenzverhinderungslichts und/oder der Lochblende nach Richtung und Umfang genutzt werden.

Das erfindungsgemäße Verfahren kann nicht nur so durchgeführt werden, dass die mit dem Fluoreszenzfarbstoff markierte Struktur separat mit den unterschiedlichen Intensitäten des Fluoreszenzverhinderungslichts und/oder den unterschiedlichen Blendenöffnungen abgetastet wird. Vielmehr kann die mit dem Fluoreszenzfarbstoff markierte Struktur in der Probe auch nur einmal mit dem Intensitätsmaximum des Anregungslichts abgetastet werden, wobei ein Rohbild erzeugt wird, in dem zwei Bilder der Probe überlagert sind, die den unterschiedlichen Intensitäten des Fluoreszenzverhinderungslichts entsprechen, und aus dem dann beide überlagerten Bilder ermittelt werden. Beispielsweise kann das Rohbild, in dem die beiden Bilder überlagert sind, erzeugt werden, indem das Fluoreszenzlicht von der Probe auch für Zeiträume mit dem Detektor registriert wird, die vor und/oder nach einer Wirksamkeit des Fluoreszenzverhinderungslichts liegen. Das mit dem Detektor registrierte Fluoreszenzlicht und das hieraus erzeugte Bild umfasst so einen nicht von dem Fluoreszenzverhinderungslicht beeinflussten Anteil, der in grundsätzlich bekannter Weise aus dem Rohbild extrahiert werden kann.

Das erfindungsgemäße Verfahren benötigt keine spezielle Struktur, die mit dem Fluoreszenzfarbstoff in der Probe markiert ist. Das erfindungsgemäße Verfahren wird jedoch dadurch vereinfacht, dass die mit dem Fluoreszenzfarbstoff markierte Struktur in der Probe fluoreszierende Nanopartikel umfasst, die in einem größeren Abstand zueinander angeordnet sind, insbesondere einem größeren Abstand als der Beugungsgrenze bei der Wellenlänge des Fluoreszenzlichts. Dann kann das erfindungsgemäße Verfahren darauf basieren, den Versatz zwischen den Abbildern eben dieser Nanopartikel in den unterschiedlich erzeugten Bilden zu berechnen und auszugleichen.

Wenn die mit dem Fluoreszenzfarbstoff markierte Struktur eine Vielzahl von fluoreszierenden Nanopartikeln umfasst oder auch irgendeine Struktur in der Probe ist, die nicht speziell für das erfindungsgemäße Verfahren hergerichtet ist, kann der Versatz zwischen den Lagen der Abbilder der Struktur in den Bildern unter Berechnen einer Kreuzkorrelation zwischen den Bildern berechnet werden. Die Berechnung von Kreuzkorrelationen zwischen Bildern gehört zu den Standardverfahren bei der Bildauswertung.

Bei dem erfindungsgemäßen Verfahren kann der Versatz zwischen den Lagen der Abbilder der Struktur in den unterschiedlich erzeugten Bildern, insbesondere als Kreuzkorrelation, auch lokal berechnet und entsprechend lokal ausgeglichen werden. Dies bedeutet, dass bei dem erfindungsgemäßen Verfahren nicht nur eine einzige globale Justierung eingestellt wird und davon ausgegangen wird, dass diese beim gemeinsamen Abtasten der Probe mit dem Intensitätsmaximum des Anregungslichts und dem Intensitätsminimum des Fluoreszenzverhinderungslichts korrekt bleibt, sondern dass für unterschiedliche Teilbereiche der Probe, die beim Abtasten der Probe angefahren werden, ein etwaiger Versatz zwischen dem Intensitätsmaximum des Anregungslichts und dem Intensitätsminimum des Fluoreszenzverhinderungslichts und/oder dem Abbild einer Lochblende vor dem Fluoreszenzlichtdetektor separat ermittelt und ausgeglichen wird. Hierfür ist dann ein optisches Element vorzusehen, dass beim Abtasten der Probe für diesen Ausgleich unterschiedlich angesteuert wird.

Das erfindungsgemäße Verfahren kann auch angewendet werden, um ein weiteres Intensitäts-maximum von weiterem Anregungslicht und/oder ein weiteres Intensitätsminimum von weiterem Fluoreszenzverhinderungslicht und/oder eine Abbildung einer weiteren Lochblende vor einem weiteren Fluoreszenzlichtdetektor auf korrekte Justierung gegenüber dem Intensitätsmaximum des Anregungslichts und dem Intensitätsminimum des Fluoreszenzverhinderungslichts und/oder der Abbildung der vor dem Fluoreszenzlichtdetektor angeordneten Lochblende im Fokus des Objektivs zu justieren oder zu überprüfen. Das weitere Fluoreszenzverhinderungslicht mit dem weiteren Intensitätsminimum kann eine andere Wellenlänge als oder auch eine gleiche Wellenlänge wie das Fluoreszenzverhinderungslicht aufweisen. Auch bei einer anderen Wellenlänge kann es dazu dienen, die Fluoreszenz derselben Fluoreszenzmarker in einer anderen räumlichen Richtung und/oder auf eine andere physikalische Weise einzuschränken als das Fluoreszenzverhinderungslicht. Wenn das weitere Anregungslicht und/oder das weitere Fluoreszenzverhinderungslicht und/oder der weitere Fluoreszenzlichtdetektor einem weiteren Fluoreszenzfarbstoff zugeordnet sind, wird zum Einstellen oder Überprüfen der korrekten Justierung eine weitere mit dem weiteren Fluoreszenzfarbstoff markierte Struktur in der oder einer weiteren Probe mit dem Intensitätsmaximum des weiteren Anregungslichts abgetastet, um weitere Bilder der oder der weiteren Probe mit Abbildern der weiteren Struktur zu erzeugen. Dann wird ein Versatz zwischen Lagen der Abbilder der weiteren Struktur in den weiteren Bildern berechnet, die unterschiedlichen Intensitäten des jeweiligen Fluoreszenzverhinderungslichts und/oder unterschiedlichen Blendenöffnungen der jeweiligen Lochblende entsprechen. Das Intensitätsmaximum des weiteren Anregungslichts kann dann zu dem Intensitätsminimum des Fluoreszenzverhinderungslichts und/oder der Abbildung der Lochblende in der Richtung dieses Versatzes und um das mindestens Einfache dieses Versatzes verlagert werden.

Um ein weiteres Intensitätsmaximum von weiterem Anregungslicht mit einer anderen Wellenlänge als derjenigen des Anregungslichts und/oder eine Abbildung einer weiteren Lochblende vor einem weiteren Fluoreszenzlichtdetektor mit einem anderen spektralen Detektionsbereich als demjenigen des Fluoreszenzlichtdetektors auf korrekte Justierung gegenüber dem Intensitäts-maximum des Anregungslichts und/oder der Abbildung der vor dem Fluoreszenzlichtdetektor angeordneten Lochblende im Fokus des Objektivs zu justieren oder zu überprüfen, kann alternativ auch eine weitere Metrik berechnet werden. Dazu wird eine mit einem einzigen, sowohl mit dem Anregungslicht als auch dem weiteren Anregungslicht anregbaren und/oder sowohl in dem spektralen Detektionsbereich des Fluoreszenzlichtdetektors als auch in dem anderen spektralen Detektionsbereich des weiteren Fluoreszenzlichtdetektors emittierenden Fluoreszenzfarbstoff markierte Struktur mit dem Intensitätsmaximum des Anregungslichts und/oder dem weiteren Intensitätsmaximum des weiteren Anregungslichts abgetastet. Die weitere Metrik wird dann als ein Spektralversatz zwischen Lagen von Abbildern der mit dem einzigen Fluoreszenzfarbstoff markierten Struktur in Bildern berechnet, die einem Anregen des Fluoreszenzfarbstoffs einmal mit dem Anregungslicht und einmal mit dem weiteren Anregungslicht und/oder einem Berücksichtigen einmal des mit dem Fluoreszenzlichtdetektor registrierten Fluoreszenzlichts und einmal des mit dem weiteren Fluoreszenzlichtdetektor registrierten Fluoreszenzlichts entsprechen.

Konkret kann der Spektralversatz, der in der Ausführungsform des erfindungsgemäßen Verfahrens gemäß Patentanspruch 14 auch als einzige Metrik berechnet werden kann, wie folgt bestimmt werden. Die mit dem einzigen Fluoreszenzfarbstoff markierte Struktur wird nacheinander mit dem Anregungslicht und dem weiteren Anregungslicht abgetastet, wobei das von dem Fluoreszenzfarbstoff emittierte Fluoreszenzlicht mit dem Fluoreszenzlichtdetektor und/oder dem weiteren Fluoreszenzlichtdetektor detektiert wird. Dabei kann es bevorzugt sein, wenn noch keine Lochblende vor dem Fluoreszenzlichtdetektor und/oder dem weiteren Fluoreszenzlichtdetektor angeordnet ist. Der Spektralversatz zwischen den beiden einmal mit dem Anregungslicht und einmal mit dem weiteren Anregungslicht erzeugten Bildern gibt unmittelbar den Fehler in der Justierung zwischen den Intensitätsminima des Anregungslichts und des weiteren Anregungslichts an. Grundsätzlich können die beiden Bilder, aus denen dieser Spektralversatz berechnet wird, auch aus einem Rohbild erzeugt werden, das durch gleichzeitiges Abtasten der Struktur mit dem Intensitätsmaximum des Anregungslichts und/oder dem weiteren Intensitätsmaximum des weiteren Anregungslichts erzeugt wird. Voraussetzung ist, dass die spektrale Zusammensetzung des Fluoreszenzlichts von dem Anregungslicht bzw. dem weiteren Anregungslicht abhängt und so aufgrund des Verhältnisses zwischen dem mit dem Fluoreszenzlichtdetektor registrierten Fluoreszenzlicht und dem mit dem weiteren Fluoreszenzlichtdetektor registrierten Fluoreszenzlicht darauf zurückgeschlossen werden kann, ob dieses auf eine Anregung des Fluoreszenzfarbstoffs mit dem Anregungslicht oder dem weiteren Anregungslicht zurückgeht.

Um die Justierung der Lochblenden vor dem Fluoreszenzlichtdetektor und dem weiteren Fluoreszenzlichtdetektor relativ zueinander einzustellen oder zu überprüfen, reicht es aus, die Struktur mit dem Intensitätsmaximum des Anregungslichts und/oder dem weiteren Intensitätsmaximum des weiteren Anregungslichts abzutasten, wenn das dabei von dem Fluoreszenzfarbstoff emittierte Fluoreszenzlicht sowohl in den Spektralbereich des Fluoreszenzlichtdetektors als auch in den weiteren Spektralbereich des weiteren Fluoreszenzlichtdetektors fällt. Dann kann der Spektralversatz, der den Fehler der Justierung direkt anzeigt, aus den Bildern berechnet werden, die einmal das mit dem Fluoreszenzlichtdetektor registrierte und einmal das mit dem weiteren Fluoreszenzlichtdetektor registrierte Fluoreszenzlicht berücksichtigen.

Wenn ein Spektralversatz auftritt, kann dieser durch entsprechendes Verlagern des Intensitäts-maximums des weiteren Anregungslichts bzw. der Lochblende vor dem weiteren Fluoreszenzlichtdetektor in der Richtung und um das Maß des Spektralversatzes ausgeglichen werden, um die korrekte Justierung einzustellen.

Es versteht sich, dass bei der Verwendung des Spektralversatzes als Maß für den bei der Justierung zu kompensierenden Fehler der Abbildungsmaßstab des Laserscanning-Fluoreszenzmikroskops zu berücksichtigen ist.

Das Intensitätsmaximum des Anregungslichts kann relativ zu dem Intensitätsminimum des Fluoreszenzverhinderungslichts und/oder der Abbildung der Lochblende auf unterschiedliche Weise verlagert werden. Hierzu zählt das Verlagern und/oder Verkipppen eines das Anregungslicht und/oder das Fluoreszenzverhinderungslicht und/oder das Fluoreszenzlicht reflektierenden optischen Elements. Auch wenn das optische Element sowohl das Anregungslicht als auch das Fluoreszenzverhinderungslicht als auch das Fluoreszenzlicht reflektiert, kann es sich zum Beispiel aufgrund unterschiedlicher Wellenlängen oder Polarisationen unterschiedlich auswirken und das Anregungslicht, das Fluoreszenzverhinderungslicht und das Fluoreszenzlicht relativ zueinander verlagern. Eine weitere Möglichkeit zur Verlagerung besteht durch das Verlagern oder Ändern eines das Anregungslicht und/oder das Fluoreszenzverhinderungslicht und/oder das Fluoreszenzlicht transmittierenden und/oder vorfokussierenden und/oder aberrierenden optischen Elements. Hierzu zählen beispielsweise Linsen und Phasenplatten. Weiterhin kann die Lochblende selbst verlagert werden, beispielsweise durch einen manuellen oder elektromotorischen Stelltrieb. Weiterhin kann die Ansteuerung einer adaptiven Optik, insbesondere eines *Spatial Light Modulators* (SLM), eines verformbaren Spiegels oder eines MEMS-Elementes die/der auf das Anregungslicht und/oder das Fluoreszenzverhinderungslicht und/oder das Fluoreszenzlicht einwirkt, geändert werden.

Das erfindungsgemäße Verfahren ist auch zum Justieren und zum Überprüfen der korrekten Justierung von Laserscanning-Fluoreszenzmikroskopen geeignet, in denen die Probe mit mehreren Intensitätsmaxima des Anregungslichts und mehreren zugeordneten Intensitätsminima des Fluoreszenzverhinderungslichts und/oder Abbildern von Lochblenden parallel abgetastet wird. So können unter Verwendung von Versätzen zwischen Lagen der Abbilder von Strukturen in Bildern, die unterschiedlichen Intensitäten des Fluoreszenzverhinderungslichts und/oder unterschiedlichen Blendenöffnungen der Lochblende entsprechen, mehrere Intensitätsmaxima des Anregungslichts und mehrere Intensitätsminima des Fluoreszenzverhinderungslichts und/oder Abbildungen mehrerer von mehreren Fluoreszenzlichtdetektoren angeordneter Lochblenden im Fokus des Objektivs paarweise zur Deckung gebracht werden.

Um die mehreren Intensitätsmaxima des Anregungslichts relativ zu den mehreren Intensitäts-minima des Fluoreszenzverhinderungslichts und/oder den Abbildungen der Lochblenden zu verlagern, kann ein das Anregungslicht und/oder das Fluoreszenzverhinderungslicht in Teilstrahlen aufspaltendes und/oder die Teilstrahlen miteinander überlagerndes optisches Element verlagert und/oder verkippt und/oder verdreht werden. Weiterhin kann ein das Anregungslicht und/oder das Fluoreszenzverhinderungslicht und/oder das Fluoreszenzlicht transmittierendes und/oder reflektierendes optisches Element verlagert und/oder verkippt werden. Das Verlagern und/oder Verkippen kann jeweils auch zwischen dem Aufbringen des Anregungslichts und des Fluoreszenzverhinderungslichts auf die Probe erfolgen, wenn hierfür, wie beispielsweise bei sogenannten RESOLFT-fluoreszenzmikroskopischen Verfahren, ausreichend Zeit ist.

Das erfindungsgemäße Verfahren kann in ein, zwei oder drei Dimensionen durchgeführt werden. Das heißt, das Intensitätsmaximum des Anregungslichts kann mit dem Intensitätsminimum des Fluoreszenzverhinderungslichts und/oder dem Abbild der Lochblende in jeder Raumrichtung zur Überdeckung gebracht werden. Hierfür ist es nur erforderlich, dass die bei der Durchführung des erfindungsgemäßen Verfahrens unterschiedlich erzeugten Bilder die jeweilige Raumrichtung auflösen. So lassen zweidimensionale, in x- und y-verlaufende Bilder einen Versatz in z-Richtung nicht erkennen. Dieser Versatz findet sich aber in dreidimensionalen Bildern ebenso wie in Bildern die in x- oder y- und z-Richtung verlaufen.

Ein erfindungsgemäßes Laserscanning-Fluoreszenzmikroskop weist eine Anregungslichtquelle für Anregungslicht, eine Fluoreszenzverhinderungslichtquelle für Fluoreszenzverhinderungslicht, einen Fluoreszenzlichtdetektor für Fluoreszenzlicht, vor dem eine Lochblende angeordnet ist, ein Objektiv, dass das Anregungslicht und das Fluoreszenzverhinderungslicht in einen Probenraum fokussiert und die Lochblende in den Probenraum abbildet, und eine automatische Justiervorrichtung auf. Die automatische Justiervorrichtung bringt ein Intensitätsmaximum des Anregungslichts und ein Intensitätsminimum des Fluoreszenzverhinderungslichts sowie die Abbildung der Lochblende unter Verwendung der erfindungsgemäßen Metrik nach dem erfindungsgemäßen Verfahren zur Deckung oder sie überprüft unter Verwendung der erfindungsgemäßen Metrik, in wieweit diese Deckung gegeben ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem optischen Element die Rede ist, ist dies so zu verstehen, dass genau ein optisches Element, zwei optische Elemente oder mehr optische Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein erfindungsgemäßes Laserscanning-Fluoreszenzmikroskop in einer schematischen Darstellung.
- **Fig. 2**: ist ein Flussdiagramm einer Ausführungsform des erfindungsgemäßen Verfahrens.
- **Fig. 3**: zeigt ein gegenüber einem Intensitätsminimum von Fluoreszenzverhinderungslicht dejustiertes Intensitätsmaximum von Anregungslicht im Probenraum des Laserscanning-Fluoreszenzmikroskops gemäß Fig.1.
- **Fig. 4**: illustriert einen Versatz zwischen Abbildern eines fluoreszierenden Nanopartikels in einem konventionellen Bild und einem hochaufgelösten STED-Bild (jeweils aufgenommen ohne oder mit geöffneter Lochblende) aufgrund des dejustierten Intensitätsmaximums des Fluoreszenzanregungslichts gemäß Fig. 3.
- **Fig. 5**: zeigt Fluoreszenzlicht-Intensitätsprofile entlang einer horizontalen Achse des konventionellen Bilds und des hochaufgelösten STED-Bilds gemäß Fig. 4.
- **Fig. 6**: zeigt das gegenüber dem Intensitätsminimum des Fluoreszenzverhinderungslichts justierte Intensitätsmaximum des Anregungslichts in einer Fig. 3 entsprechenden Darstellung.
- **Fig. 7**: zeigt die Abbilder eines fluoreszierenden Nanopartikels in einem konventionellen Bild und einem nicht-konfokalen hochaufgelösten STED-Bild bei dem justierten Intensitätsmaximum des Anregungslichts gemäß Fig. 6.
- **Fig. 8**: zeigt Fluoreszenzlicht-Intensitätsprofile entlang einer horizontalen Achse des konventionellen Bilds und des hochaufgelösten STED-Bilds gemäß Fig. 7.
- **Fig. 9**: zeigt eine gegenüber dem Intensitätsmaximum des Anregungslichts und dem Intensitätsminimum des Fluoreszenzverhinderungslichts dejustierte Abbildung einer Lochblende im Probenraum des Laserscanning-Fluoreszenzmikroskops gemäß Fig.1.
- **Fig. 10**: illustriert einen Versatz zwischen Abbildern eines fluoreszierenden Nanopartikels in einem konfokalen Bild und einem hochaufgelösten STED-Bild aufgrund der dejustierten Lochblende gemäß Fig. 9.
- **Fig. 11**: zeigt Fluoreszenzlicht-Intensitätsprofile entlang einer horizontalen Achse des konfokalen Bilds und des hochaufgelösten STED-Bilds gemäß Fig. 10.
- **Fig. 12**: zeigt das Intensitätsmaximum des Anregungslichts, das Intensitätsminimum des Fluoreszenzverhinderungslichts und die Abbildung der Lochblende nach dem Justieren in einer Fig. 9 entsprechenden Darstellung.
- **Fig. 13**: zeigt wie Fig. 10 Abbilder eines fluoreszenten Nanopartikels in einem konfokalen Bild und einem STED-Bild, hier aber nach dem Justieren der Lochblende.
- **Fig. 14**: zeigt Fluoreszenzlicht-Intensitätsprofile entlang einer horizontalen Achse des konfokalen Bilds und des hochaufgelösten STED-Bilds nach dem Justieren der Lochblende in einer Fig. 10 entsprechenden Darstellung; und
- **Fig. 15**: ist ein Flussdiagramm einer weiteren Ausführungsform des erfindungsgemäßen Verfahrens.

### FIGURENBESCHREIBUNG

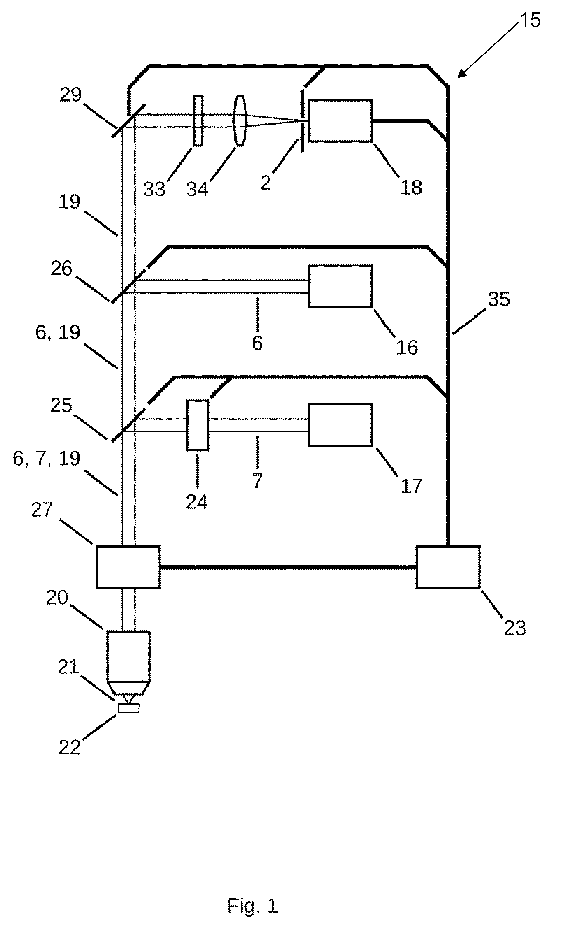

Das in **Fig. 1** gezeigte Laserscanning-Fluoreszenzmikroskop 15 weist eine Anregungslichtquelle 16 für Anregungslicht 6 auf. Das Anregungslicht 6 wird von einem Strahlteiler 26 zu einem weiteren Strahlteiler 25 hin reflektiert. Der Strahlteiler 25 dient zum Überlagern des Anregungslichts 6 mit Fluoreszenzverhinderungslicht 7, das von einer Fluoreszenzverhinderungslichtquelle 17 kommt. Dabei ist im Strahlengang des Fluoreszenzverhinderungslichts 7 zwischen der Fluoreszenzverhinderungslichtquelle 17 und dem Strahlteiler 25 ein Wellenfrontmodulator 24 vorgesehen. Das mit dem Fluoreszenzverhinderungslicht 7 kombinierte Anregungs-licht 6 wird durch den Strahlteiler 25, über einen Scanner 27 und durch ein fokussierendes Objektiv 20 in einen Probenraum 21 gerichtet. In dem Probenraum 21 ist eine Probe 22 angeordnet, in die hinein das Anregungslicht 6 und das Fluoreszenzverhinderungslicht 7 fokussiert werden. Aus der Probe 22 emittiertes Fluoreszenzlicht 19 gelangt durch das Objektiv 20, den Scanner 27 und die Strahlteiler 25 und 26, über einen Spiegel 29 sowie durch einen Fluoreszenzlichtfilter 33, eine Linse 34 und eine Lochblende 2, wobei die Linse das Fluoreszenzlicht 19 auf die Blendenöffnung der Lochlende fokussiert, auf einen Fluoreszenzlichtdetektor 18. Eine automatische Justiervorrichtung 23 scannt die Probe 22 ab, um Bilder einer mit einem Fluoreszenzfarbstoff markierten Struktur in der Probe 22 zu erzeugen, die unterschiedlichen Intensitäten des Fluoreszenzverhinderungslichts 7 und/oder unterschiedlichen Blendenöffnungen der Lochblende 2 entsprechen. Dabei können die unterschiedlichen Intensitäten des Fluoreszenzverhinderungslichts eingeschaltetem und ausgeschaltetem Fluoreszenzverhinderungslicht 7 entsprechen, und die unterschiedlichen Blendenöffnungen der Lochblende können vorhandener und entfernter oder weit über eine Airy-Einheit hinaus geöffneter und damit unwirksamer Lochblende 2 entsprechen. Wenn sich dabei ein Versatz zwischen den Abbildern der Struktur in den unterschiedlich erzeugten Bildern ergibt, korrigiert die Justiervorrichtung 23 diesen Versatz durch Verlagerung der Lochblende 2 oder des Spiegels 29 oder durch Anpassung des Phasenmusters des Wellenfrontmodulators 24 oder durch Einfluss auf den Scanner 27. Auch Lageveränderungen anderer optischer Elemente, die ein Verkippen und/oder Verdrehen einschließen können, sind beim Ausgleich des festgestellten Versatzes durch die Justiervorrichtung 23 möglich. Darüber hinaus kann eine aktive oder adaptive Optik, wie beispielsweise ein SLM, ein verformbarer Spiegel oder ein MEMS-Element, im Strahlengang des Anregungslichts 6 und/oder Fluoreszenzverhinderungslichts 7 und/oder Fluoreszenzverhinderungslichts 19 angeordnet sein und zum Justieren des Laserscanning-Fluoreszenzmikroskops 15 von der Justiervorrichtung 23 über Steuer-/Messleitungen 35 angesteuert werden.

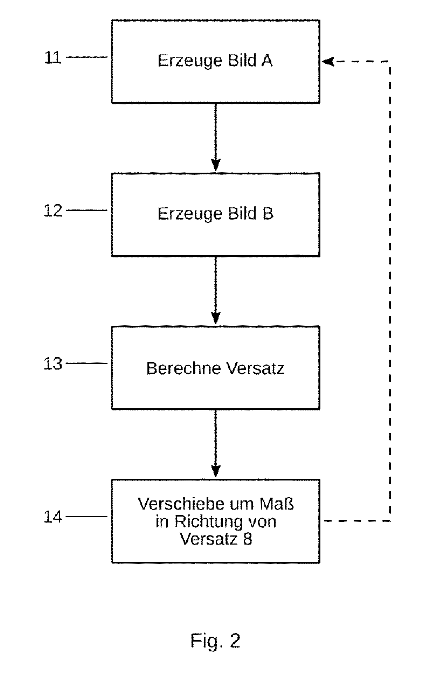

**Fig. 2** ist ein Flussdiagramm des von der Justiervorrichtung 23 gemäß Fig. 1 ausgeführten Verfahrens zur Justage, d. h. zum Einstellen der korrekten Justierung des Laserscanning-Fluoreszenzmikroskop 15. In einem Schritt 11 wird ein Bild A und in einem Schritt 12 wird ein Bild B erzeugt, wobei sich die Bilder A und B durch unterschiedliche Intensitäten des Fluoreszenzverhinderungslichts 7 und/oder unterschiedliche Blendenöffnungen der Lochblende 2 unterscheiden. Dabei können die Schritte 11 und 12 auch nur ein einmaliges Abtasten der Probe 22 mit dem Anregungslicht 6 und dem Fluoreszenzverhinderungslicht 7 umfassen, wenn das dabei gewonnene Rohbild die beiden Bilder A und B in trennbarer Form enthält. In einem Schritt 13 wird der Versatz zwischen den Abbildern der Struktur in den beiden Bildern A und B berechnet. In einem Schritt 14 wird dieser Versatz kompensiert, indem die Intensitätsverteilung des Fluoreszenzverhinderungslichts 7 oder die Lochblende 2 gegenüber dem Anregungslicht 8 mindestens um das Einfache des Versatzes und genau in Richtung des Versatzes verschoben wird. Das genaue Maß des Verschiebens, um den Versatz in einem Schritt zu kompensieren, hängt von dem Verhältnis der räumlichen Auflösungen der beiden Bilder A und B ab..

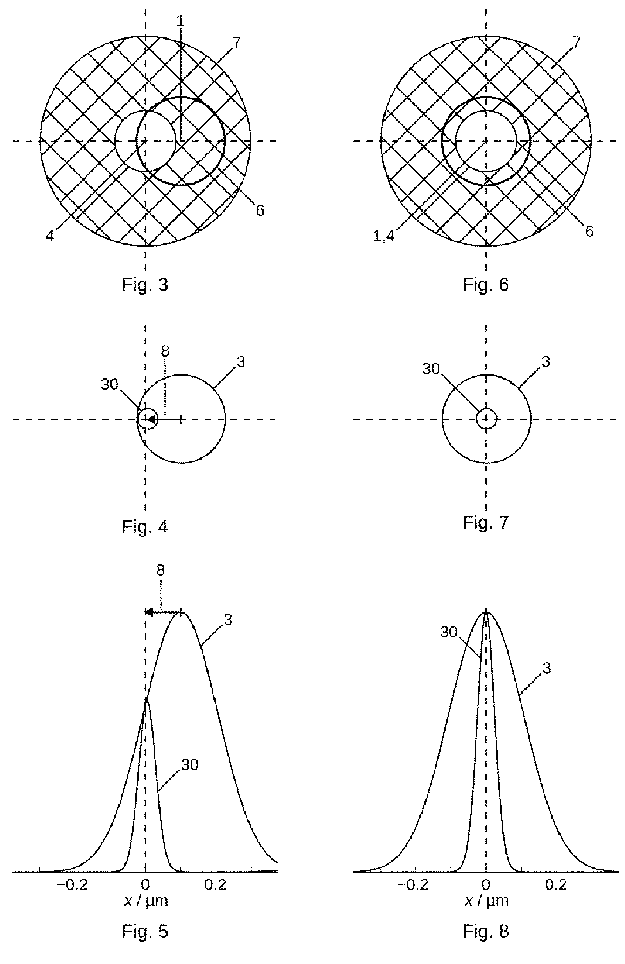

**Fig. 3** zeigt im Probenraum 21 um den Fokus des Objektivs 20 des Laserscanning-Fluoreszenzmikroskops 15 gemäß Fig. 1 das Minimum 4 des Fluoreszenzverhinderungslichts 7 und das Maximum 1 des Anregungslichts 6, das hier gegenüber dem Minimum 4 dejustiert ist. Den hieraus resultierenden Versatz 8 eines Abbilds 30 eines fluoreszenten Nanopartikels in einem mit dem Laserscanning-Fluoreszenzmikroskop 15 gemäß Fig. 1 aufgenommenen hochaufgelösten, aber nicht konfokal detektierten Bild gegenüber einem Abbild 3 desselben Nanopartikels in einem mit dem Laserscanning-Fluoreszenzmikroskop 15 aufgenommenen konventionellen Bild ebenfalls ohne konfokale Detektion zeigt **Fig. 4. Fig. 5** gibt denselben Versatz anhand der Fluoreszenzlicht-Intensitätsprofile der Abbilder 30 und 3 wieder.

Wenn jetzt das Intensitätsmaximum 1 des Anregungslichts 6 in Richtung des Versatzes 8 und um nur etwas mehr als das Einfache des Versatzes 8, weil der Unterschied zwischen der Auflösung der beiden Bilder des fluoreszenten Nanopartikels hier sehr groß ist, gegenüber dem Intensitätsminimum 4 des Fluoreszenzverhinderungslichts 7 verschoben wird, ergibt sich die in **Fig. 6** gezeigte korrekte Justierung, bei der die Abbilder 3 und 30 konzentrisch überlappen, siehe **Fig. 7 und 8****.**

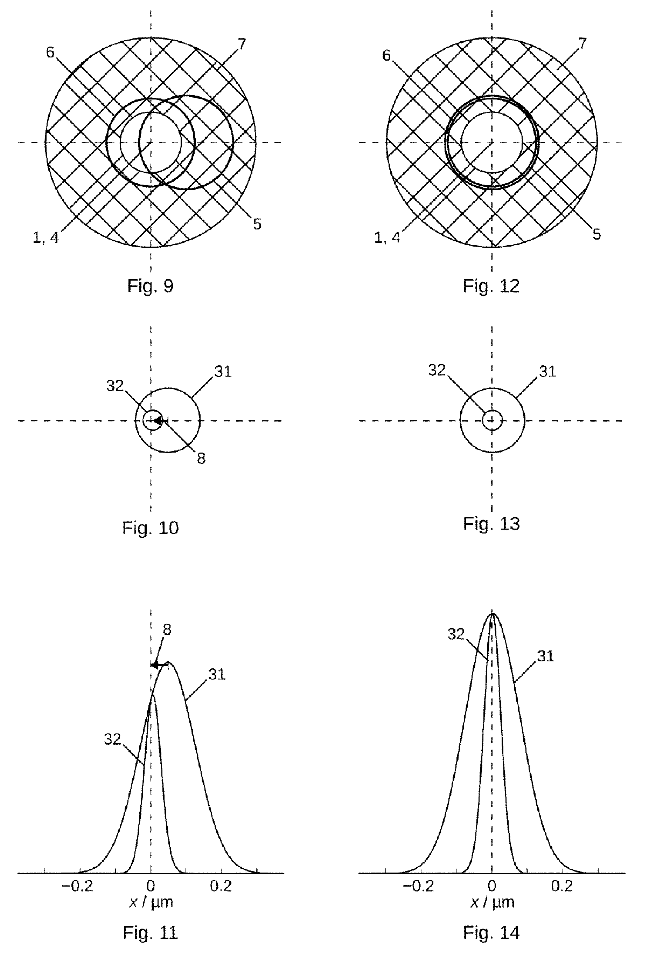

**Fig. 9** zeigt zusätzlich zu Fig. 6 eine Abbildung 5 der Lochblende 2 gemäß Fig. 1, die hier gegenüber dem Intensitätsminimum 4 des Fluoreszenzverhinderungslichts 7 und gegenüber dem Intensitätsmaximum 1 des Anregungslichts 6 dejustiert ist. Hieraus resultiert der in Fig. 10 gezeigte Versatz zwischen einem Abbild 32 eines fluoreszenten Nanopartikels in einem konfokal detektierten hochaufgelösten Bild gegenüber einem Abbild 31 desselben fluoreszenten Nanopartikels in einem konfokal detektierten konventionellen Bild, jeweils aufgenommen mit dem Laserscanning-Fluoreszenzmikroskop 15 gemäß Fig. 1. Dieser Versatz findet sich auch in den Fluoreszenzlicht-Intensitätsprofilen der Abbilder 31 und 32 gemäß **Fig. 11** wieder. Verglichen mit dem Maß, um das die Abbildung 5 der Lochblende gegenüber dem Intensitätsminimum 4 des Fluoreszenzverhinderungslichts 7 dejustiert ist, ist der Versatz 8 hier kleiner als im Fall des dejustierten Maximums 1 des Anregungslichts 6 gemäß den Fig. 1 bis 3. Dies liegt daran, dass der Unterschied in der räumlichen Auflösung zwischen dem konventionellen Bild und dem hochaufgelösten Bild bei konfokaler Detektion kleiner ist.

Als Konsequenz muss das Abbild 5 der Lochblende 2 um deutlich mehr als das Einfache des Versatzes 8, wobei dieses Maß von der Relativbeziehung der räumlichen Auflösungen abhängt, aber wieder genau in der Richtung des Versatzes 8 verschoben werden, um die Dejustierung gemäß Fig. 9 zu beseitigen und um zu dem justierten Zustand der Abbildung 5 der Lochblende 2 gemäß **Fig. 12** zu gelangen. Bei korrekter Justierung der Abbildung 5 der Lochblende fallen die Abbilder 31 und 32 desselben Nanopartikels in einem konventionellen und einem hochaufgelösten Bild jeweils mit konfokaler Detektion konzentrisch zusammen, wie dies die **Fig. 13 und 14** zeigen.

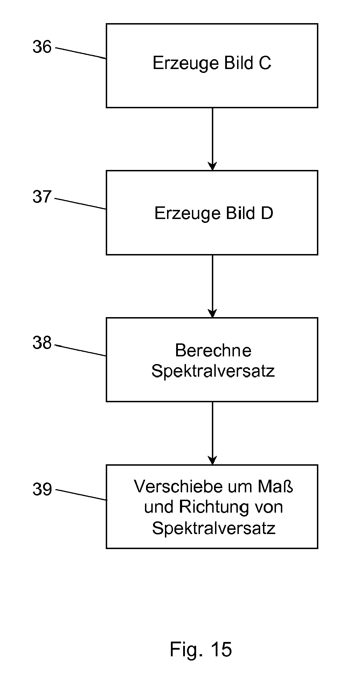

Die in **Fig. 15** anhand eines weiteren Blockdiagramms erläuterte Ausführungsform des erfindungsgemäßen Verfahrens beginnt mit einem Schritt 36, in dem ein Bild C einer mit einem einzigen Fluoreszenzfarbstoff markierten Struktur einer Probe durch Abtasten mit dem Intensitätsmaximum von Anregungslicht einer Wellenlänge erzeugt wird. In einem folgenden Schritt 37 wird ein weiteres Bild D derselben Struktur erzeugt, indem die Struktur mit dem Intensitätsmaximum von weiterem Anregungslicht einer anderen Wellenlänge abgetastet wird, die den Fluoreszenzfarbstoff ebenfalls zur Emission von Fluoreszenzlicht anregt. Danach wird in einem Schritt 38 ein Spektralversatz berechnet, der sich zwischen den Abbildern der Struktur in den Bildern C und D ergibt. Dieser Spektralversatz entspricht einem Fehler der Justierung zwischen dem Intensitätsmaximum des Anregungslichts und dem Intensitätsmaximum des weiteren Anregungslichts. Wenn in einem Folgeschritt 39 die Intensitätsmaxima des Anregungslichts und des weiteren Anregungslichts um das Maß und in der Richtung des Spektralversatzes zueinander verschoben werden, wird eine korrekte Justierung der beiden Intensitätsmaxima zueinander erreicht.

Entsprechend kann das Bild C bei Anregung des Fluoreszenzfarbstoffs nur mit dem Anregungslicht oder dem weiteren Anregungslicht, wobei aber der Fluoreszenzfarbstoff sowohl in dem spektralen Detektionsbereich eines Fluoreszenzlichtdetektors als auch in dem anderen spektralen Detektionsbereich eines weiteren Fluoreszenzlichtdetektors emittiert, aus dem mit dem einen Fluoreszenzlichtdetektor registrierten Fluoreszenzlicht erzeugt werden, während das Bild D aus dem mit dem anderen Fluoreszenzlichtdetektor registrierten Fluoreszenzlicht erzeugt wird. Der im Schritt 38 berechnete Spektralversatz zeigt dann den Fehler der Justierung zwischen den Fluoreszenzlichtdetektoren bzw. einer Lochblende vor dem einen Fluoreszenzlichtdetektor und einer weiteren Lochblende vor dem weiteren Fluoreszenzlichtdetektor an. Dieser Fehler ist für eine korrekte Justierung zu beseitigen, indem die weitere Lochblende gegenüber der Lochblende in der Richtung und um das Maß des Spektralversatzes verschoben wird.

### BEZUGSZEICHENLISTE

- 1: Intensitätsmaximum
- 2: Lochblende
- 3: Abbild (konventionelles Bild, nicht-konfokal detektiert)
- 4: Intensitätsminimum
- 5: Abbildung der Lochblende 2
- 6: Anregungslicht
- 7: Fluoreszenzverhinderungslicht
- 8: Versatz
- 11-14: Schritt
- 15: Laserscanning-Fluoreszenzmikroskop
- 16: Anregungslichtquelle
- 17: Fluoreszenzverhinderungslichtquelle
- 18: Fluoreszenzlichtdetektor
- 19: Fluoreszenzlicht
- 20: Objektiv
- 21: Probenraum
- 22: Probe
- 23: Justiervorrichtung
- 24: Wellenfrontmodulator
- 25: Strahlteiler
- 26: Strahlteiler
- 27: Scanner
- 29: Spiegel
- 30: Abbild (hochaufgelöstes Bild, nicht-konfokal detektiert)
- 31: Abbild (konventionelles Bild, konfokal detektiert)
- 32: Abbild (hochaufgelöstes Bild, konfokal detektiert)
- 33: Filter
- 34: Linse
- 35: Steuer-/Messleitung
- 36-39: Schritt
- A-D: Bild

## Patentansprüche

1. Verfahren zum Einstellen oder Überprüfen einer korrekten Justierung eines Laserscanning-Fluoreszenzmikroskops (15), in der ein Intensitätsmaximum (1) von Anregungslicht (6) und ein Intensitätsminimum (4) von Fluoreszenzverhinderungslicht (7) und/oder eine Abbildung (5) einer vor einem Fluoreszenzlichtdetektor (18) angeordneten Lochblende (2) im Fokus eines Objektivs (20) zusammenfallen, wobei eine mit einem Fluoreszenzfarbstoff markierte Struktur in einer Probe (22) mit dem Intensitätsmaximum (1) des Anregungslichts (6) abgetastet wird, um Bilder (A, B) der Probe (22) mit Abbildern (3, 30, 31, 32) der Struktur zu erzeugen, und wobei aus den Abbildern (3, 30, 31, 32) der Struktur in den Bildern eine Metrik berechnet wird, die eine Abweichung von der korrekten Justierung anzeigt, **dadurch gekennzeichnet, dass** die erzeugten Bilder unterschiedlichen Intensitäten des Fluoreszenzverhinderungslichts (7) und/oder unterschiedlichen Blendenöffnungen der Lochblende (2) entsprechen und dass die Metrik ein Versatz (8) zwischen Lagen der Abbilder (3, 30, 31, 32) der Struktur in den erzeugten Bildern ist.

2. Verfahren nach Anspruch 1, **dadurch gekennzeichnet, dass** zum Einstellen der korrekten Justierung des Laserscanning-Fluoreszenzmikroskops (15) das Intensitätsmaximum (1) des Anregungslichts (6) relativ zu dem Intensitätsminimum (4) des Fluoreszenzverhinderungslichts (7) und/oder der Abbildung der Lochblende (2) in der Richtung des Versatzes (8) verlagert wird, den das Abbild (30) der Struktur in einem Bild, das einer höheren Intensität des Fluoreszenzverhinderungslichts (7) und/oder einer kleineren Blendenöffnung der Lochblende (2) entspricht, gegenüber dem Abbild (3) der Struktur in einem anderen Bild aufweist, das einer niedrigeren Intensität des Fluoreszenzverhinderungslichts (7) und/oder einer größeren Blendenöffnung der Lochblende (2) entspricht.

3. Verfahren nach Anspruch 1 oder 2, **dadurch gekennzeichnet, dass** zum Einstellen der korrekten Justierung des Laserscanning-Fluoreszenzmikroskops (15) die Abbildung der Lochblende (2) relativ zu dem Intensitätsminimum (4) des Fluoreszenzverhinderungslichts (7) in der Richtung des Versatzes (8) verlagert wird, den das Abbild (32) der Struktur in einem Bild, das einer höheren Intensität des Fluoreszenzverhinderungslichts (7) entspricht, gegenüber dem Abbild (31) der Struktur in einem anderen Bild aufweist, das einer niedrigeren Intensität des Fluoreszenzverhinderungslichts (7) entspricht.

4. Verfahren nach Anspruch 2 oder 3, **dadurch gekennzeichnet, dass** das Intensitäts-maximum (1) des Anregungslichts (6) oder die Abbildung (5) der Lochblende (2) um ein Maß verschoben wird, das dem F-fachen Versatz (8) entspricht, wobei F größer oder gleich 1 ist und wobei F eine Funktion von räumlichen Auflösungen der Struktur in dem einen und dem anderen Bild ist und/oder der unterschiedlichen Intensitäten des Fluoreszenzverhinderungslichts (7) ist, denen das eine und das andere Bild entsprechen.

5. Verfahren nach einem der vorhergehenden Ansprüche, **dadurch gekennzeichnet, dass** die mit dem Fluoreszenzfarbstoff markierte Struktur in der Probe (22) wiederholt mit dem Intensitätsmaximum (1) des Anregungslichts (6) abgetastet wird, wobei die Intensität des Fluoreszenzverhinderungslichts (7) und/oder die Blendenöffnung der Lochblende (2) von Bild zu Bild variiert wird, um die Bilder der Probe (22) zu erzeugen, die den unterschiedlichen Intensitäten des Fluoreszenzverhinderungslichts (7) und/oder unterschiedlichen Blendenöffnungen der Lochblende (2) entsprechen.

6. Verfahren nach einem der vorhergehenden Ansprüche, **dadurch gekennzeichnet, dass** die mit dem Fluoreszenzfarbstoff markierte Struktur in der Probe (22) einmal mit dem Intensitätsmaximum (1) des Anregungslichts (6) abgetastet wird, wobei ein Rohbild erzeugt wird, in dem zwei Bilder der Probe (22) überlagert sind, welche den unterschiedlichen Intensitäten des Fluoreszenzverhinderungslichts (7) zuzuordnen sind, und aus dem die beiden überlagerten Bilder ermittelt werden.

7. Verfahren nach Anspruch 6, **dadurch gekennzeichnet, dass** das Rohbild, in dem die beiden Bilder der Probe (22) überlagert sind, erzeugt wird, indem das Fluoreszenzlicht (19) von der Probe (22) auch für Zeiträume mit dem Detektor registriert wird, die vor und/oder nach einer Wirksamkeit des Fluoreszenzverhinderungslichts (7) liegen.

8. Verfahren nach einem der vorhergehenden Ansprüche, **dadurch gekennzeichnet, dass** die mit dem Fluoreszenzfarbstoff markierte Struktur in der Probe (22) fluoreszierende Nanopartikel aufweist.

9. Verfahren nach einem der vorhergehenden Ansprüche, **dadurch gekennzeichnet, dass** der Versatz (8) zwischen den Lagen der Abbilder (3, 30, 31, 32) der Struktur in den Bildern unter Berechnen einer Kreuzkorrelation zwischen den Bildern berechnet wird.

10. Verfahren nach einem der vorhergehenden Ansprüche, **dadurch gekennzeichnet, dass** der Versatz (8) zwischen den Lagen der Abbilder (3, 30, 31, 32) der Struktur in den Bildern lokal berechnet und ausgeglichen wird.

11. Verfahren nach einem der vorhergehenden Ansprüche, **dadurch gekennzeichnet, dass** ein weiteres Intensitätsmaximum (1) von weiterem Anregungslicht (6) und/oder ein weiteres Intensitätsminimum (4) von weiterem Fluoreszenzverhinderungslicht (7) und/oder eine Abbildung einer weiteren Lochblende vor einem weiteren Fluoreszenzlichtdetektor (18) unter Verwendung der Metrik auf korrekte Justierung gegenüber dem Intensitätsmaximum (1) des Anregungslichts (6) und dem Intensitätsminimum (4) des Fluoreszenzverhinderungslichts (7) und/oder der Abbildung der vor dem Fluoreszenzlichtdetektor (18) angeordneten Lochblende (2) im Fokus des Objektivs (20) justiert oder überprüft wird/werden.

12. Verfahren nach einem der vorhergehenden Ansprüche, **dadurch gekennzeichnet, dass** ein weiteres Intensitätsmaximum von weiterem Anregungslicht mit einer anderen Wellenlänge als derjenigen des Anregungslichts (6) und/oder eine Abbildung einer weiteren Lochblende vor einem weiteren Fluoreszenzlichtdetektor mit einem anderen spektralen Detektionsbereich als demjenigen des Fluoreszenzlichtdetektors (18) unter Verwendung einer weiteren Metrik auf korrekte Justierung gegenüber dem Intensitätsmaximum (1) des Anregungslichts (6) und/oder der Abbildung der vor dem Fluoreszenzlichtdetektor (18) angeordneten Lochblende (2) im Fokus des Objektivs (20) justiert oder überprüft wird/werden, wobei eine mit einem sowohl mit dem Anregungslicht (6) als auch dem weiteren Anregungslicht anregbaren und/oder sowohl in dem spektralen Detektionsbereich des Fluoreszenzlichtdetektors (18) als auch in dem anderen spektralen Detektionsbereich des weiteren Fluoreszenzlichtdetektors emittierenden Fluoreszenzfarbstoff markierte Struktur mit dem Intensitätsmaximum (1) des Anregungslichts (6) und/oder dem weiteren Intensitätsmaximum des weiteren Anregungslichts abgetastet wird und wobei die weitere Metrik ein Spektralversatz zwischen Lagen von Abbildern der mit dem Fluoreszenzfarbstoff markierten Struktur in Bildern (C, D) ist, die einem Anregen des Fluoreszenzfarbstoffs einmal mit dem Anregungslicht und einmal mit dem weiteren Anregungslicht und/oder einem Berücksichtigen einmal des mit dem Fluoreszenzlichtdetektor registrierten Fluoreszenzlichts und einmal des mit dem weiteren Fluoreszenzlichtdetektor registrierten Fluoreszenzlichts entsprechen.

13. Verfahren nach einem der vorhergehenden Ansprüche, **dadurch gekennzeichnet, dass** unter Verwendung von Versätzen (8) zwischen Lagen der Abbilder (9, 10) von Strukturen in Bildern, die unterschiedlichen Intensitäten des Fluoreszenzverhinderungslichts (7) und/oder unterschiedlichen Blendenöffnungen der Lochblende (2) entsprechen, mehrere Intensitäts-maxima (1) des Anregungslichts (6) und mehrere Intensitätsminima (4) des Fluoreszenzverhinderungslichts (7) und/oder Abbildungen mehrerer vor mehreren Fluoreszenzlichtdetektoren (18) angeordneter Lochblenden (2) paarweise im Fokus des Objektivs (20) zur Deckung gebracht werden.

14. Verfahren zum Einstellen oder Überprüfen einer korrekten Justierung eines Laserscanning-Fluoreszenzmikroskops (15), in der ein Intensitätsmaximum (1) von Anregungslicht (6) mit einer Wellenlänge und ein weiteres Intensitätsmaximum von weiterem Anregungslicht mit einer anderen Wellenlänge und/oder eine Abbildung (5) einer vor einem Fluoreszenzlichtdetektor (18) mit einem spektralen Detektionsbereich angeordneten Lochblende (2) und eine Abbildung einer weiteren Lochblende vor einem weiteren Fluoreszenzlichtdetektor mit einem anderen spektralen Detektionsbereich im Fokus eines Objektivs (20) zusammenfallen,
- wobei eine mit einem sowohl mit dem Anregungslicht (6) als auch dem weiteren Anregungslicht anregbaren und/oder sowohl in dem spektralen Detektionsbereich des Fluoreszenzlichtdetektors (18) als auch in dem anderen spektralen Detektionsbereich des weiteren Fluoreszenzlichtdetektors emittierenden Fluoreszenzfarbstoff markierte Struktur mit dem Intensitätsmaximum (1) des Anregungslichts (6) und/oder dem weiteren Intensitätsmaximum des weiteren Anregungslichts abgetastet wird, um Bilder (C, D) der Probe (22) mit Abbildern der Struktur zu erzeugen, und
- wobei ein eine Abweichung von der korrekten Justierung anzeigender Spektralversatz zwischen Lagen von Abbildern der mit dem Fluoreszenzfarbstoff markierten Struktur in Bildern bestimmt wird, die einem Anregen des Fluoreszenzfarbstoffs einmal mit dem Anregungslicht und einmal mit dem weiteren Anregungslicht und/oder einem Berücksichtigen einmal des mit dem Fluoreszenzlichtdetektor registrierten Fluoreszenzlichts und einmal des mit dem weiteren Fluoreszenzlichtdetektor registrierten Fluoreszenzlichts entsprechen.

15. Laserscanning-Fluoreszenzmikroskop (15) mit
- einer Anregungslichtquelle (16) für Anregungslicht (6);
- einer Fluoreszenzverhinderungslichtquelle (17) für Fluoreszenzverhinderungslicht (7);
- einem Fluoreszenzlichtdetektor (18) für Fluoreszenzlicht (19), vor dem eine Lochblende (2) angeordnet ist;
- einem Objektiv (20), dass das Anregungslicht (6) und das Fluoreszenzverhinderungslicht (7) in einen Probenraum (21) fokussiert und die Lochblende (2) in den Probenraum (21) abbildet; und
- einer automatischen Justiervorrichtung (23), die dazu eingerichtet ist, eine korrekte Justierung, in der ein Intensitätsmaximum (1) des Anregungslichts (6) und ein Intensitätsminimum (4) des Fluoreszenzverhinderungslichts (7) und die Abbildung (9, 10) der Lochblende (2) im Fokus des Objektivs (20) zusammenfallen, unter Verwendung einer Metrik einzustellen oder zu überprüfen, die eine Abweichung von der korrekten Justierung anzeigt, **dadurch gekennzeichnet, dass** die Justiervorrichtung (23) dazu ausgebildet ist, das Verfahren nach einem der vorhergehenden Ansprüche automatisch durchzuführen.
